# EUROPÄISCHE PATENTSCHRIFT

(11) **EP 3 759 892 B1**
(45) Veröffentlichungstag und Bekanntmachung des Hinweises auf die Patenterteilung: **21.05.2025**
(21) Anmeldenummer: 19711494.5
(22) Anmeldetag: 28.02.2019
(51) Int. Cl.: H04L 67/10, H04L 67/51, H04L 67/52

(54) **VORRICHTUNG FÜR DIE KOMBINIERTE ANZEIGE VON KARTENMATERIAL UND AUSSENWERBUNG.**
DEVICE FOR THE COMBINED DISPLAY OF CARTOGRAPHIC MATERIAL AND OUTDOOR ADVERTISEMENT
DISPOSITIF POUR L'AFFICHAGE COMBINÉ DE MATÉRIEL CARTOGRAPHIQUE ET DE PUBLICITÉ EXTÉRIEURE.

(30) Priorität: 28.02.2018 CH 2422018; 16.03.2018 CH 3402018
(43) Veröffentlichungstag der Anmeldung: 06.01.2021
(73) Patentinhaber: Clear Channel International Limited, London W1F 9JT (GB)
(72) Erfinder: ALBRECHT, Clemens, 6331 Hünenberg (CH)
(74) Vertreter: Alder, Hans Rudi
(86) Internationale Anmeldenummer: PCT/CH2019/000006
(87) Internationale Veröffentlichungsnummer: WO 2019/165565

(56) Entgegenhaltungen:
- US-A1- 2014 156 186
- US-B1- 6 571 279

## Beschreibung

Die vorliegende Erfindung betrifft eine Vorrichtung für die kombinierte Anzeige von Kartenmaterial und Aussenwerbung gemäss Oberbegriff des Anspruchs 1.

Kartenmaterial, insbesondere elektronische Stadtpläne, sind bekannt und finden ihre Verwendung bspw. in Form einer elektronischen Anzeigefläche eines freistehenden Aussenständers. Solche elektronische Stadtpläne erlauben das interaktive Abrufen von unterschiedlichen Stadtplan-Darstellungen, bspw. mit Verkehrshinweisen und Umfahrungswegen für den Individualverkehr, Fahrplänen und Fahrrouten für den ÖV, mit virtuell besuchbaren Sehenswürdigkeiten und Unterkunftsorten für Touristen oder mit hilfreichen Informationen für Behinderte, manchmal auch mit Geo-Datenportalen, bspw. Bauflächenkataster für Berufsleute oder mit Möglichkeiten für den virtuellen rund-um-die-Uhr Besuch von öffentlichen Ämtern.

Ein freistehender Aussenständer für einen interaktiven Stadtplan, um Ortsunkundige auf rasche und einfache Art die Fahrwege bestimmter Buslinien, deren Abfahrtszeiten und die Fahrkosten für die Fahrt von einem aktuellen Standort zu einer gewünschten Destination aufzuzeigen, ist bspw. in der CN-104572749 beschrieben. Bei einer in der CN-2703278 beschriebenen, interaktiven Informationstafel lassen sich bestehende Unterkünfte auffinden und zusätzlich deren Lage und Zimmerpreise, sowie eine Wegbeschreibung dorthin, in einfacher Weise und aus einer in dieser Informationstafel integrierten Computer-Datenbanken, abrufen. Die in dieser Computer-Datenbank gespeicherten Informationen lassen sich von Zeit zu Zeit aktualisieren.

Diese interaktiven Stadtpläne bekannter Art arbeiten autonom und werden in der Regel in Form von Aussenständern, resp. Stelen an Einfallstrassen an der Peripherie einer Stadt, im Bereich von Einkaufstrassen einer Stadt oder zentral in Bahnhöfen aufgestellt, um den ankommenden Passanten bei der Orientierung zu helfen, und geben diesen keine weitere Informationen, bspw. zu aktuellen touristischen Attraktionen, zu besonderen Veranstaltungen oder zur aktuellen Verfügbarkeit von Unterkünften. Diese Aussenständer unterstehen meistens auch den lokalen Verordnungen für das Aufstellen von Grosswerbetafeln und sind bewilligungspflichtig, d.h. können nicht an allen werbewirksamen Orten installiert werden. US 2014/156186 sowie US 6 571 279 beschreiben weitere Beispiele von aus dem Stand der Technik bekannter Systeme.

Es ist deshalb Aufgabe der vorliegenden Erfindung eine Vorrichtung mit interaktivem Kartenmaterial (Map), insbesondere mit einem interaktiven Stadtplan, interaktiven Wetterdaten und/oder interaktiven Tourismusdaten zu schaffen, welcher die Nachteile der bekannten Vorrichtungen mit einem interaktiven Kartenmaterial überwindet und insbesondere eine solche Vorrichtung in Kombination mit mindestens einem digitalen Advertising zu schaffen. Mit dieser Vorrichtung sollen nicht nur lokal gespeicherte Daten abrufbar sind, sondern auch aktuelle Informationen angezeigt und aktualisiert werden können. Dieses interaktive Kartenmaterial und das digitalen Advertising sollen in frei wählbarer Weise angeordnet werden können, d.h. auf demselben Bildschirm (screen) oder auf unterschiedlichen (vorder- und rückseitigen) Bildschirmen (screens) derselben Installation (Einrichtung in Form eines freistehenden oder wandmontierten Anzeigegerätes) oder auf unterschiedlichen Bildschirmen unterschiedlicher Installationen.

Es ist auch Aufgabe der vorliegenden Erfindung die abrufbaren aktuellen Informationen auf portable Geräte übertragen zu können, um die Passanten standortsunabhängig zu den gewünschten Destinationen führen zu können.

Es ist eine weitere Aufgabe der vorliegenden Erfindung die Ansteuerung des mindestens einen digitalen Werbescreens unabhängig von derjenigen für die Maps zu gestallten, d.h. diese Ansteuerung unabhängig vom Standort der Installation halten zu können.

Erfindungsgemäss wird diese Aufgabe durch eine Vorrichtung mit den Merkmalen des Anspruchs 1 sowie durch die Verwendung dieser Vorrichtung gemäss Anspruch 8 gelöst. Weitere bevorzugte Weiterbildungen der Vorrichtung sind in den Unteransprüchen beschrieben.

Im Folgenden soll die Erfindung anhand eines Ausführungsbeispiels und mit Hilfe der Figuren näher erläutert werden. Dabei zeigt:
- Fig. 1:: eine schematische Darstellung zum Aufbau der erfindungsgemässen Vorrichtung.
- Fig. 2:: eine schematische Darstellung zum Aufbau einer Vorrichtungskomponente für die Anzeige eines softwaregesteuerten Advertising;
- Fig. 3:: eine schematische Darstellung zum Aufbau einer Vorrichtungskomponente für die Anzeige einer interaktiven Karte.

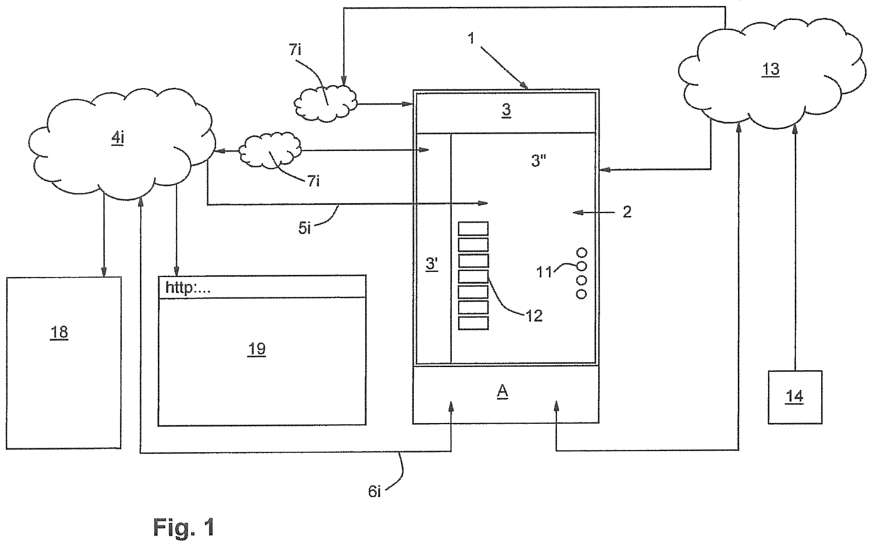

Die Fig. 1 zeigt beispielhaft eine ortsfest montierte Stele mit einem doppelseitigen digitalen Panel (1). Das dargestellte digitale Panel (1) weist ein digitales Display (2) mit vorzugsweise mehreren Teilflächen (3, 3', 3", 3‴) auf, insbesondere für die Darstellung einer Map (3") und mehrerer Werbe-Anzeigen/Werbescreens (3, 3', 3‴). Eine Liste mit interaktiven Schaltflächen (11) und/oder eine interaktive Point-of-Interest-Liste (12), vorzugsweise in Form von Touchscreens erlaubt den Benutzern das Abrufen von weiteren gewünschten Detail-Informationen. Die Ansteuerung (digital Signage Setup) der digitalen Werbescreens (3, 3', 3"') umfasst erfindungsgemäss mindestens drei Baugruppen: i) ein digitales doppelseitiges Panel (1) in Form einer freistehenden Stele oder eines wandmontierten Doppelmonitors, gegebenenfalls auch eine mehrteilige Panelgruppe, ii) ein digitales Content-Management-System in einer Cloud (13) und iii) ein Content-Management-Administrator-System auf einem Office PC (14) eines Administrators, sowie eine elektronische Baugruppe (A) für die Ansteuerung des digitalen Displays (2).

Erfindungsgemäss ist das digitale Panel (1) mit einem Content-Management-System (4i) eines Geo-Informationssystems und dessen SaaS kombiniert. Die Daten (mapping content) dieses Geo-CMS (4i) können in Pull-Manier direkt (5i) oder über Cloud-Datafeed-Systeme (7i) abgerufen werden.

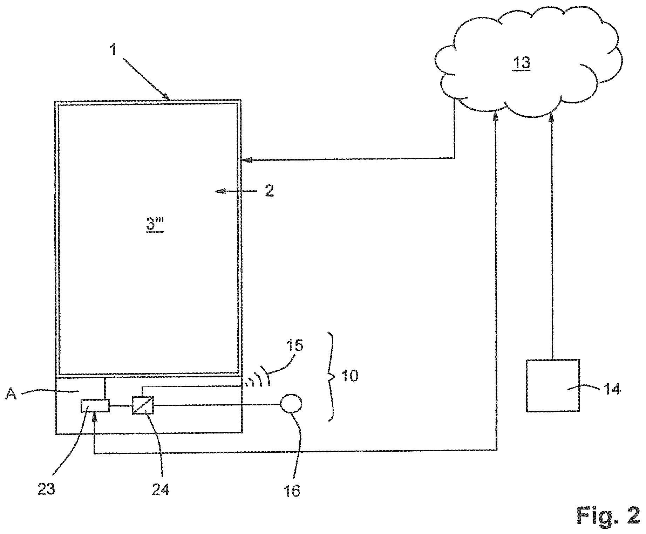

Fig. 2 zeigt die Vorderseite des in Fig. 1 dargestellten Panel (1) mit einem grossflächigen digitalen Display (2) für die Anzeige eines softwaregesteuerten Advertising (3‴). Hier umfasst das digitale Panel (1) beispielhaft eine Ansteuerungs-Einheit (A) mit mindestens a) einem digitalen Player (23), d.h. lokalen Rechner, b) einem Mobilfunk-Router (24), vorzugsweise einen 4G-Router, oder einen Switch für die WLAN- oder LAN-Verbindung ins Internet, sowie c) mindestens ein digitales Display (2) für die Anzeige des digitalen Contents. Es versteht sich, dass die Verbindung ins Internet (10) über einen Festnetzanschluss (16) und/oder über einen Mobilfunk-, resp. WiFi-Anschluss (15) hergestellt werden kann.

Diese Ansteuerung (A) funktioniert vorzugsweise im Pull-Mechanismus, d.h. der Player (23) fragt in periodischer Folge beim CMS (13), vorzugsweise bei einem dazugehörigen SaaS, in der Cloud (13), ob neue Content- und/oder Config-Angaben, bspw. zu Schedules oder Updates, vorliegen. Gegebenenfalls lädt der Player (23) diese Angaben direkt und lokal herunter. Mit Ausnahme von Online-Kampagnen, bspw. über einen direkten URL-Link oder über zyklische Updates, wie bei Wetterinfos, wird der Content (Bild oder Video) lokal abgespielt.

Es versteht sich, dass die Ansteuerung (A) auch im Push-Verfahren betrieben sein kann, um die Daten zu aktualisieren.

Das in der Cloud installierte digitale Content Management System (13) mit der cloudbasierten Digital Signage Software (SaaS) ist wesentlicher Bestandteil der vorliegenden Erfindung und beinhaltet alle wesentlichen Touristikinformationen. Hier sind sämtliche Konfigurationen des Inventars sowie der jeweiligen Kampagnen abgelegt. Diese SaaS Lösung des Digital Signage Herstellers kann über das öffentliche Internet mit User Logins geschützte oder über eine andere gesicherte Verbindung zu einer privaten Cloud erreicht werden.

Das Content-Management-Administrator-System (14) kann bspw. auf den Office PC's installiert sein und bspw. von einem eigenen Campaign Managent & IT Team verwendet. Je nach Firmenstruktur kann das Campaign Management auch über ein Administrator-System erfolgen, welches lokal auf einem Computer installiert ist oder via Web-Interface bedient werden kann. Dieses System erlaubt den Zugriff auf die SaaS Datenbank und wird einerseits für die Verwaltung und Erstellung des Inventars durch die IT sowie andererseits für die Erstellung der digitalen Kampagnen eingesetzt. Damit können Inhalte hochgeladen und Kampagnen geplant werden, welche dann in der SaaS Lösung des CMS in der Cloud (13) gespeichert werden und vom Player (23) wie vorgesehen wieder heruntergeladen werden können.

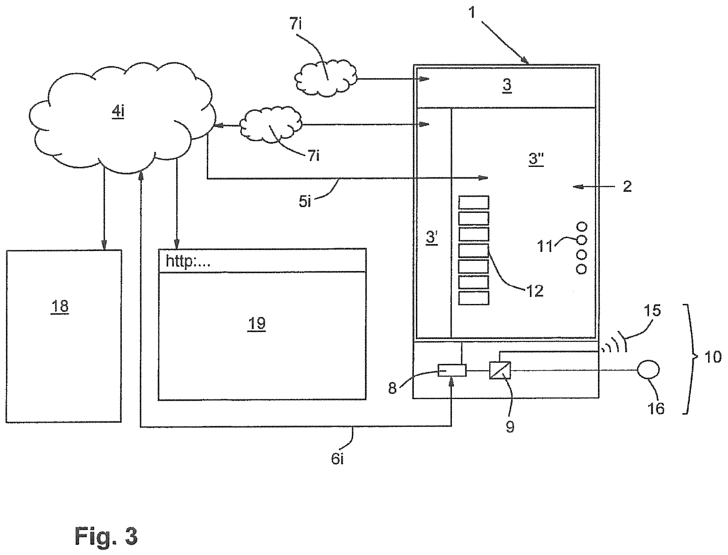

Wie in Fig. 3 dargestellt ist das digitale Panel (1) auch mit einem Content-Management-Systems (4i) eines Geo-Informationssystems und dessen SaaS gekoppelt. Die Daten (mapping content) dieses Geo-CMS (4i) oder andere Daten können über APIs (application programming interfaces) in Pull-Manier direkt (5i) oder über Cloud-Datafeed-Systeme (7i) abgerufen werden und können Daten für lokale Geo-Informations Applikationen (6i), welche offline auf einem separaten Player (8) laufen und touch-interactions erlauben, direkt abgerufen werden. Die APIs (application programming interfaces) erlauben es, digitale Ads, wie Kartenmaterial, Pol's (Point of Interest), aber auch zusätzliche Felder für Werbung und/oder für live feeds über die verschiedenen online CMS's zu aktualisieren. Insbesondere kann mit der vorliegenden Vorrichtung eine Geo-CMS (4i) bekannter Art verwendet werden, um die Daten (mapping content) direkt (5i) abzurufen. Weitere CMS's (7i) erlauben das Zuschalten von live-feeds für die digitalen Werbescreens (3, 3', 3", 3‴). Es versteht sich, dass die vorhandenen Daten von den Manager Komponenten des Geo-Info-Systems (4i) oder über diese CMS's (7i) oder direkt vom cloudbasierten digital Content-Management-System (13) aktualisiert werden können und die Änderungen über die vorhandenen API's (Schnittstellen) synchronisiert werden können, um danach wieder offline auf dem CityMap-Player (8) ablaufen zu können. Diese API's erlauben es auch, CMS's von anderen Pol-Partnern implementieren zu können. Zusätzlich können die Daten der verwendeten CMS's (4i) auch online genutzt werden, bspw. von einer full-online Web-App (19) oder von App's für Mobiles (18).

Die vorliegenden Werbe- und Informationstafeln sind bekanntermassen stationär und werden vorzugsweise freistehend aufgestellt. In einer bevorzugten Ausführungsform der vorliegenden Erfindung ist das digitale Panel (1) doppelseitig und weist für die gleichzeitige Anzeige bspw. auf der Vorderseite digital Ads (digital advertising, digitale Werbung) und auf der Rückseite eine CityMap auf. Es versteht sich, dass mit der vorliegenden Vorrichtung auch andere Anordnungen möglich sind, bspw. mit getrennten und wandmontierten Monitoren oder mit SplitScreens für die gleichzeitige Anzeige unterschiedlichen Contents.

In einer bevorzugten Ausführungsform lassen sich mit der erfindungsgemässen Vorrichtung auch verschiedene Kartenarten (Globe, Street) anzeigen und weist das in Figur 3 beispielhaft dargestellte Display (2) auf der linken Seite eine Pol-Liste (inkl. Abbildungen und Ansichten) und auf der rechten Seite eine Navigationsliste mit interaktiven Schaltflächen/Tasten, bspw. mit Bus-Fahrplan, Basis-Kartendarstellungs-Wahl, Sprachen-Wahl, etc. auf. Vorzugsweise ist auf diesem Display auch der Startpunkt, sowie ein Berührungs-Symbol (Hand), ein Routing (Routenführung), ein QR-Code zum scannen von Informationen zum Pol oder zum Hochladen der Routing-Führung auf ein Smartphone via bspw. Google^{®} aktuelle Fahrpläne aller ÖV-Dienste für jeden individuellen Startort, etc. dargestellt und ist ein Tracking aller Interaktionen vorgesehen.

Die Vorteile der vorliegenden Erfindung sind dem Fachmann unmittelbar ersichtlich und insbesondere in der Schaffung von Schnittstellen zur automatisierten Aktualisierung der auf dem Digital Panel ersichtlichen Anzeigen, bspw. Kartenmaterial, Pol's und/oder zusätzlichen Frames, wie Werbung und/oder live-feeds, über unterschiedliche Online CMS (bspw. ArcGis Online), sowie deren offline Synchronisation. Damit erlaubt die vorliegende Erfindung die Daten zu den Pol's und/oder Werbeflächen, bspw. für Unterkünfte, insbesondere Inhalte/Informationen als Internetseite auf einem Desktop, Laptop, Notebook, Tablet, oder einem Smartphone-Display auch online und/oder in Apps zu nutzen.

### Bezugszeichen:

- 1: Digital Panel
- 2: Digital Display, doppelseitig
- 3, 3', 3‴: Werbescreens, Advertising
- 3": interactiver Screen für Map (Kartenmaterial)
- 4i: Manager Komponenten des Geo-info-Systems und dessen SaaS
- 5i: Contributor Komponenten
- 6i: Runtime Komponenten
- 7i: CMS für Templates-, Widgets- und live-feeds-Komponenten
- 8: Digital Player
- 9: Mobilfunk-Router oder Switch
- 10: Internet-Anbindung über Mobilfunk, Kabel oder WiFi
- 11: Interaktive Schaltflächen-Liste
- 12: Interaktive Point-of-Interest-Liste (Pol's)
- 13: Cloudbasiertes digital Content-Management-System, CMS
- 14: Content-Management-Administrator-System, CMAS
- 15: WLAN-Anschluss
- 16: Festnetz-Anschluss (Kupfer, Glasfaser)
- 18: Mobile App System (Smartphone App)
- 19: Full-online Web-App System (Webseite)
- 23: Digital Player
- 24: Routerl Switch

## Patentansprüche

1. Vorrichtung für die kombinierte Anzeige von Kartenmaterial und Werbung, umfassend eine elektronisch vernetzte Einrichtung für die gleichzeitige Anzeige sowohl mindestens eines digitalen und softwaregesteuerten Advertising (3, 3', 3"') als auch mindestens einer interaktiven Map (3"), welche Vorrichtung mindestens folgende Komponenten aufweist:
- ein digital Content-Management-System (13);
- ein digital Content-Management-Administrator-System (14);
- Manager-Komponenten (4i), für eine internetbasierte Anwendung auf Basis eines Geo-Informations-Systems für die Erstellung und Verwaltung von Maps;
- Contributor-Komponenten (5i), für die Bildung von mindestens einer Schnittstelle zum Synchronisieren der Maps mit einer Runtime-Anwendung (App);
- Runtime-Komponenten (6i), für die Client-Software für den Einsatz der Maps im Offline-Modus auf Netzwerkkomponenten mit Touchscreen und mit optimierter Oberfläche und intuitivem User-Interface
wobei
diese Einrichtung eine doppelseitige Anzeige in Form einer freistehenden Stele oder eines wandmontierten Doppelmonitors für die doppelseitige Anzeige von Kartenmaterial einerseits und von grossflächiger Aussenwerbung andererseits aufweist, wobei das digital Content-Management-System (13) ein cloudbasiertes digital Content-Management-System (13) Ist, mit welchem die digitalen Werbescreens (3, 3', 3‴) direkt aktualisierbar sind,
wobei diese Vorrichtung mindestens ein CMS, Content-Management-System, für Templates-, Widgets- und Live-feeds-Komponenten (7i), für die Bildung von Erweiterungsbausteinen und/oder vordefinierter Vorlagen für spezifische Anwendungen, welche vorzugsweise vom Endkunden individuell benutzbar sind, umfasst,
derart, dass diese Templates-, Widgets- und Live-feeds-Komponenten (7i) für private Kundensegmente, bspw. für Event-Veranstalter, Hotellerie-, Restaurant-, Shop- oder Malls-Betreiber, Online-Verkäufer und andere lokale Anbieter geeignet sind.

2. Vorrichtung nach Anspruch 1, **dadurch gekennzeichnet, dass** die Manager-Komponenten (4i) und/oder die Contributor-Komponenten (5i) und/oder die Runtime-Komponenten (6i) cloudbasierte Komponenten sind.

3. Vorrichtung nach einem der Ansprüche 1 oder 2, **dadurch gekennzeichnet, dass** das digitale Panel (1) folgende weitere Komponenten aufweist:
- einen digital Player (8, 23); und/oder
- einen Mobilfunk-Router, insbesondere für einen WLAN- oder LAN-Anschluss oder einen Switch (9, 24) für einen Festnetzanschluss; und/oder
- einen zweiseitigen digitalen Display (2).

4. Vorrichtung nach Anspruch 3, **dadurch gekennzeichnet, dass** der Mobilfunk-Router (9, 24) ein 3G-Router, vorzugsweise ein 4G- oder 5G-Router ist.

5. Vorrichtung nach einem der vorgehenden Ansprüche 1 bis 4, **dadurch gekennzeichnet, dass** diese weitere Komponenten umfasst, um angezeigte Informationen auf ein tragbares Gerät (18) zu übertragen, insbesondere über ein QR-Code System.

6. Vorrichtung nach Anspruch 5, **dadurch gekennzeichnet, dass** diese weitere Komponenten umfasst, um das tragbare Gerät (18) zu tracken.

7. Vorrichtung nach Anspruch 6, **dadurch gekennzeichnet, dass** diese weitere Komponenten umfasst, um Interaktionen mit diesem tragbaren Gerät (18) zu ermöglichen.

8. Verwendung der Vorrichtung gemäss einem der vorgehenden Ansprüche 1 bis 7 für den Betrieb eines digitalen Panels (1), in Form einer freistehenden Stele oder eines wandmontierten Doppelmonitors, für die gleichzeitige und doppelseitige Anzeige mindestens eines softwaregesteuerten Advertising in Kombination mit mindestens einer interaktiven Map (3").

## Claims

1. Device for the combined display of map material and advertising, comprising an electronically networked device for the simultaneous display of at least one digital and software-controlled advertisement (3, 3', 3‴) and at least one interactive map (3"), which device comprises at least the following components:
- a digital content management system (13);
- a digital content management administrator system (14);
- manager components (4i) for an internet-based application based on a geo-information system for the creation and management of maps;
- contributor components (5i) for the formation of at least one interface for synchronizing the maps with a runtime application;
- runtime components (6i) for the client software for using the maps in offline mode on network components with touchscreen and with optimized surface and intuitive user interface,
wherein
this device comprises a double-sided display in the form of a free-standing stele or a wall-mounted double monitor for the double-sided display of map material on the one hand and large-scale outdoor advertising on the other hand, where the digital content management system (13) is a cloud-based digital content management system (13) with which the digital advertising screens (3, 3', 3‴) can be updated directly,
wherein
this device comprises at least one CMS, content management system, for templates, widgets and live feeds components (7i), for the formation of extension modules and/or predefined templates for specific applications, which can preferably be used individually by the end customer,
such that these templates, widgets and live feeds components (7i) are suitable for private customer segments, e.g. event organizers, hotel, restaurant, shop or mall operators, online sellers and other local providers.

2. Device according to claim 1, **characterized in that** the manager components (4i) and/or the contributor components (5i) and/or the runtime components (6i) are cloud-based components.

3. Device according to one of claims 1 or 2, **characterized in that** the digital panel (1) has the following additional components:
- a digital player (8, 23); and/or
- a mobile radio router, in particular for a WLAN or LAN connection or a switch (9, 24) for a landline connection; and/or
- a two-sided digital display (2).

4. Device according to claim 3, **characterized in that** the mobile radio router (9, 24) is a 3G router, preferably a 4G or 5G router.

5. Device according to one of the preceding claims 1 to 4, **characterized in that** it comprises further components to transmit displayed information to a portable device (18), in particular via a QR code system.

6. Device according to claim 5, **characterized in that** it comprises further components to track the portable device (18).

7. Device according to claim 6, **characterized in that** it comprises further components to enable interactions with this portable device (18).

8. Use of the device according to one of the preceding claims 1 to 7 for operating a digital panel (1), in the form of a free-standing stele or a wall-mounted double monitor, for the simultaneous and double-sided display of at least one software-controlled advertisement in combination with at least one interactive map (3").

## Revendications

1. Dispositif d'affichage combiné de matériel cartographique et de publicité, comprenant un dispositif en réseau électronique pour l'affichage simultané d'au moins une publicité numérique et contrôlée par logiciel (3, 3', 3"') et d'au moins une carte interactive (3"), lequel dispositif comporte au moins les composants suivants:
- un système de gestion de contenu numérique (13);
- un système d'administration de gestion de contenu numérique (14);
- composants de gestion (4i), pour une application internet basée sur un système de géo-information pour la création et la gestion de cartes;
- composants contributeurs (5i) pour former au moins une interface de synchronisation des cartes avec une application d'exécution;
- composants d'exécution (6i), pour le logiciel client permettant d'utiliser les cartes en mode hors ligne sur des composants réseau avec écran tactile et avec une surface optimisée et une interface utilisateur intuitive,
où
cet appareil comporte un affichage double face sous la forme d'une stèle autoportante ou d'un double moniteur mural pour l'affichage double face de matériel cartographique d'une part et de publicité extérieure à grande échelle d'autre part, le système de gestion de contenu numérique (13) étant un système de gestion de contenu numérique basé sur le cloud (13) avec lequel les écrans publicitaires numériques (3, 3', 3"') peuvent être mis à jour directement,
où
ce dispositif comprend au moins un CMS, système de gestion de contenu, pour des modèles, des widgets et des composants de flux en direct (7i), pour la formation de modules d'extension et/ou de modèles prédéfinis pour des applications spécifiques, qui peuvent de préférence être utilisés individuellement par le client final,
de telle sorte que ces modèles, widgets et composants de flux en direct (7i) conviennent aux segments de clientèle privés, par exemple les organisateurs d'événements, les exploitants d'hôtels, de restaurants, de magasins ou de centres commerciaux, les vendeurs en ligne et autres fournisseurs locaux.

2. Dispositif selon la revendication 1, **caractérisé en ce que** les composants gestionnaires (4i) et/ou les composants contributeurs (5i) et/ou les composants d'exécution (6i) sont des composants basés sur le cloud.

3. Dispositif selon l'une des revendications 1 ou 2, **caractérisé en ce que** le panneau numérique (1) comporte les composants supplémentaires suivants :
- un lecteur numérique (8, 23); et/ou
- un routeur mobile, notamment pour une connexion WLAN ou LAN ou un commutateur (9, 24) pour une connexion fixe; et/ou
- un affichage numérique recto verso (2).

4. Dispositif selon la revendication 3, **caractérisé en ce que** le routeur radio mobile (9, 24) est un routeur 3G, de préférence un routeur 4G ou 5G.

5. Dispositif selon l'une des revendications précédentes 1 à 4, **caractérisé en ce qu'**il comprend d'autres composants pour transmettre des informations affichées à un appareil portable (18), notamment via un système de code QR.

6. Dispositif selon la revendication 5, **caractérisé en ce qu'**il comprend en outre des composants permettant de suivre le dispositif portable (18).

7. Dispositif selon la revendication 6, **caractérisé en ce qu'**il comprend en outre des composants pour permettre des interactions avec ce dispositif portable (18).

8. Utilisation du dispositif selon l'une des revendications précédentes 1 à 7 pour l'exploitation d'un panneau numérique (1), sous forme d'une stèle autoportante ou d'un double moniteur mural, pour l'affichage simultané et recto verso d'au moins une publicité commandée par logiciel en combinaison avec au moins une carte interactive (3").
